# EUROPEAN PATENT APPLICATION

(11) **EP 3 154 242 A1**
(43) Date of publication of application: **12.04.2017**
(21) Application number: 15306604.8
(22) Date of filing: 09.10.2015
(51) Int. Cl.: H04L 29/12, H04L 29/08

(54) **APPARATUS AND METHOD FOR DEVICE MODEL IDENTIFICATION USING ITS MAC ADDRESS**

(71) Applicant: Thomson Licensing, 92130 Issy-les-Moulineaux (FR)
(72) Inventor: FILOCHE, Thierry, 35576 Cesson-Sévigné (FR); NEUMANN, Christoph, 35576 Cesson-Sévigné (FR); LE SCOUARNEC, Nicolas, 35576 Cesson-Sévigné (FR)
(74) Representative: Browaeys, Jean-Philippe

(57) **Abstract**

An apparatus (100) receives (S21) a MAC address of a device via a network interface (130) and a processor (110) extracts (S22) its OUI, which is used (S23) to obtain the manufacturer of the device and the OUI registration date. The apparatus then uses (S24) manufacturer sales information to find models that match the OUI registration date, obtains (S25) the models' proportion of sales, computes (S26) the "MAC weight" of each model, computes (S27) the likelihood of possible models, and uses (S28) the obtained knowledge for network management.

## Description

### TECHNICAL FIELD

The present disclosure relates generally to computer networks, and particularly to identification of a model of a device.

### BACKGROUND

Nowadays, virtually every device intended to connect to a computer network are given a MAC (Media Access Control) address during manufacture. The MAC address comprises 48 bits, of which the first 24 are a OUI (Organizationally Unique Identifier). The OUI is provided to the manufacturer by the IEEE RAC (Registration Authority Committee). The following 24 bits, may be assigned by the manufacturer having been assigned a particular OUI. A 48-bit MAC address is also sometimes called EUI-48 (Extended Unique Identifier).

Since the MAC addresses are expressed using 48 bits, they are a limited resource. As such, the IEEE RAC places restrictions on their use. One of the main restrictions is that before being assigned a new OUI or OUIs, a manufacturer should have used 95% of the potential EUI-48 values that can be generated by its already assigned OUI. In other words, there is a just-in-time allocation of OUIs to the manufacturers.

Moreover, previous OUIs must be fully exhausted before use of the new one(s) (i.e. a manufacturer should exhaust all potential EUI-values from a previously assigned OUI before starting to generate EUI-48 values from a newly assigned OUI). This is true regardless of product range or manufacturing location; the IEEE RAC requires that "Assignments should not be used on a per product basis or by manufacturing location." [see http://standards.ieee.org/faqs/regauth.html]

The restrictions imposed by the IEEE RAC enable the following conclusions:
- As the OUIs are allocated on a just in time basis, OUIs can be used to determine, at least within a certain range, the release date and the age of a device.
- OUIs indicate the manufacturer of a device.

The manufacturer can be obtained from a public file called oui.txt (see http://standards-oui.ieee.org/oui.txt) and also from https://code.wireshark.org/review/gitweb?p=wireshark.git;a=blob_plain;f=manuf.

At the same time, the date of registration of an OUI can be obtained through the public GIT software (the free and open source distributed version control system, http://git-scm.com/) log of Wireshark that can be found at https://code.wireshark.org/review/wireshark. Indeed, the code base of Wireshark contains the file "manuf" that maps OUIs to manufacturer. Since October 2008, the file is automatically updated every week based on the mapping files provided by the IEEE RAC. Before October 2008, the file was updated every one to three months. The file is versioned with git. The GIT history thus allows to determine the date of assignment of an OUI to a manufacturer.

However, it is not possible to use the MAC address to obtain further information about the device such as the model of the device. This is evidenced by for example the following discussions taken from Web forums: http://www.tomshardware.co. u k/answers/id-2293761 /find ing-device-model-based-mac-address.html, http://apple.stackexchange.com/questions/16597/is-it-possible-to-determine-the-model-of-an-ios-device-by-its-mac-address and http://apple.stackexchange.com/questions/49948/differentiating-apple-products-by-their-mac-addresses?rq=1.

It will be appreciated that there are situations in which it is desirable to obtain device-specific information from the MAC address. The present disclosure provides such a solution that enables this.

### SUMMARY OF DISCLOSURE

In a first aspect, the present principles are directed to an apparatus for determining device specific information from a MAC address. The apparatus comprises a network interface configured to receive a MAC address of a device and a hardware processor configured to determine a Organizationally Unique Identifier from the MAC address, determine, using the Organizationally Unique Identifier, the manufacturer of the device and the Organizationally Unique Identifier registration date, and determine, using the Organizationally Unique Identifier registration date and model (i.e. device type) sales information for the manufacturer of the device, possible matching models.

Various embodiments of the first aspect include:
- That the hardware processor is further configured to use knowledge about the possible matching models for network management. Network management can comprise at least one of device authentication, device specific tests in order to further determine the model, pushing of updates for the device towards the device, and determination the age of the device to determine whether or not the device needs an update.
- That the hardware processor is further configured to compute, for each model, a probability that the device is of the model from relative sales of the models and a number of MAC addresses used by each device of the model.

In a second aspect, the present principles are directed to a method for determining device specific information from a MAC address. At an apparatus a network interface receives a MAC address of a device and a hardware processor determines a Organizationally Unique Identifier from the MAC address, determines, using the Organizationally Unique Identifier, the manufacturer of the device and the Organizationally Unique Identifier registration date, and determines, using the Organizationally Unique Identifier registration date and model sales information for the manufacturer of the device, possible matching models.

Various embodiments of the second aspect include:
- Performing, by the hardware processor, network management based on knowledge about the possible matching models. Network management can comprise at least one of device authentication, device specific tests in order to further determine the model, pushing of updates for the device towards the device, and determination the age of the device to determine whether or not the device needs an update.
- Computing, by the hardware processor, for each model, a probability that the device is of the model from relative sales of the models and a number of MAC addresses used by each device of the model.

In a third aspect, the present principles are directed to a computer program comprising program code instructions executable by a processor for implementing the steps of a method according to the second aspect.

In a fourth aspect, the present principles are directed to a computer program product which is stored on a non-transitory computer readable medium and comprises program code instructions executable by a processor for implementing the steps of a method according to the second aspect.

### BRIEF DESCRIPTION OF DRAWINGS

Preferred features of the present principles will now be described, by way of non-limiting example, with reference to the accompanying drawings, in which
Figure 1 illustrates a device implementing the present principles;
Figure 2 illustrates a method for model identification according to a preferred embodiment of the present principles;
Figure 3 further illustrates a method step using a non-exhaustive exemplary timeline;
Figures 4A and 4B illustrate a first part of a further example; and
Figure 5 illustrates a second part of the further example.

### DESCRIPTION OF EMBODIMENTS

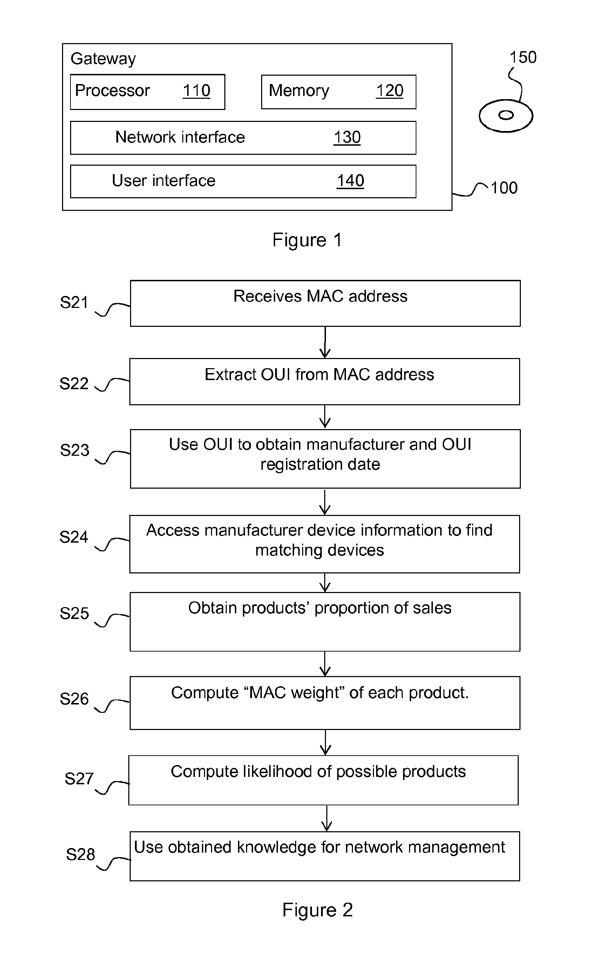

Figure 1 illustrates an exemplary device 100 implementing the present principles. The device 100 comprises at least one hardware processing unit ("processor") 110, external or internal (or a combination of the two) memory 120, a network interface 130 configured to communicate with other devices and, in particular, to receive a MAC address. The device 100 further comprises a user interface 140. The skilled person will appreciate that the illustrated device is very simplified for reasons of clarity, thus not showing features such as internal connections and power supplies. A non-transitory storage medium 150 stores at least one computer program with instructions that, when executed by a processor, perform the method for model identification illustrated in Figure 2.

The device 100 can for example be a gateway, a Wi-Fi access point or a server that receives requests from the previous devices.

As already explained, the GIT makes it possible to obtain the OUI registration date with good precision. Taken together with knowledge about the shelf-life of a manufacturer's models - such as release date and end of production - it is then normally possible to conclude, using the MAC address, that the corresponding device belongs to one of a limited number of possible models. Put another way, knowing when a device's OUI of a device was registered and when the manufacturer's different models existed, it is possible to determine the models that are possible matches, i.e. if the device is inside or outside the life cycles of different models

Figure 2 illustrates a method for determining possible models for a given MAC address according to the present principles.

In step S21, the device 100 receives a MAC address via the network interface 130.

In step S22, the processor 110 of the device 100 extracts the OUI from the MAC address.

In step S23, the processor 110 uses the extracted OUI to obtain manufacturer and the OUI registration date. The manufacturer can be obtained through the public OUI file, while the OUI registration date is preferably obtained using the Wireshark GIT. This can for example be done by accessing the source online or by extracting the data from a downloaded copy of the source stored in the memory 120.

In step S24, the processor 110 accesses manufacturer device information to find the devices whose manufacturing periods match the OUI registration date.

In step S25, the processor 110 accesses information on sales of all devices of this manufacturer, and especially the proportion of sales per product, and a given time window (i.e. month, quarter).

In step S26, the processor 110 computes the number of MAC addresses used by the manufacturer during the given time window for each product sold. This can easily be done by multiplying the number of products sold per the number of MAC addresses required for this product. For instance: one MAC address for a computer with only an Ethernet port; two MAC addresses for a product offering 802.11 wireless and Bluetooth^{®} features; four MAC addresses for a product offering two Ethernet ports, 802.11 wireless and Bluetooth^{®} features. The processor 110 can then deduce the weight of each product on the number of MAC addresses used and can establish a "product estimation table" giving a distribution of the MAC addresses for each product.

In other words, in step S26, the "MAC weight" of each product compared to the other products is obtained.

In step S27, the processor 110 returns the likelihoods of each possible product, based on the OUI collected in S22, and the table computed in S26. This will be further illustrated by example hereinafter.

In step S28, the processor uses at least the knowledge of possible devices for network management purposes.

A first example of network management is device authentication. If a device purports to be of a specific kind, the MAC address can be used to check if this is at all possible. If not, it can be determined that the device is pretending to be something it is not.

A second example is to limit the number of device specific tests in order to further determine the kind of device. For example, if the MAC address indicates that the device cannot be an iPad2, then there is no point in performing such a test, which means that resources will not be wasted performing pointless tests.

A third example is that it is possible to push updates towards a gateway or similar that the device in question connects through habitually. That way, when the update is to be done, it may be done without first needing to download the update in question.

A fourth example is that the OUI registration date can be used to determine the age of the device, which in turn may be used to determine whether or not the device needs an update, for example to provide new functionality or to patch security problems.

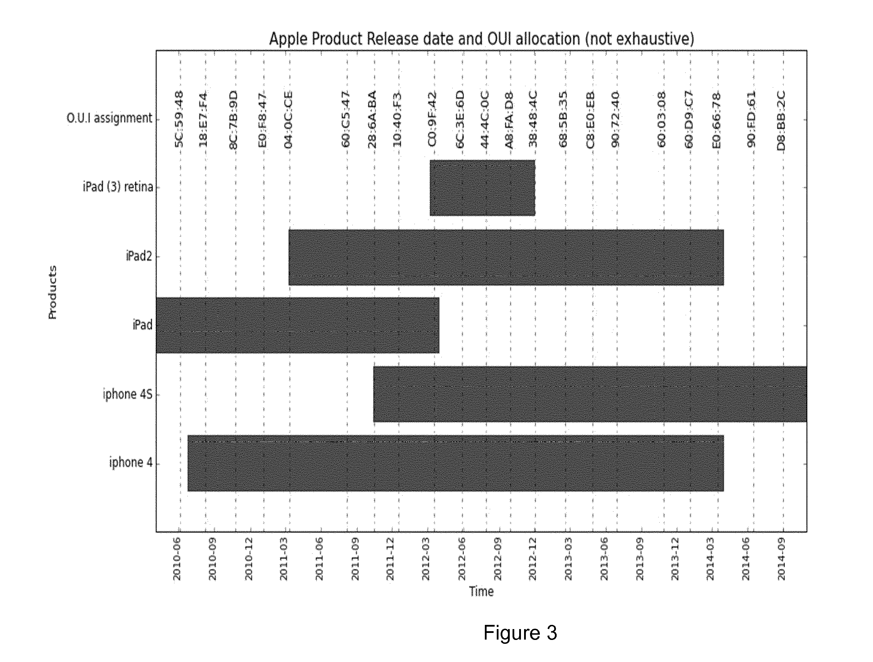

Figure 3 illustrates step S24 using a non-exhaustive exemplary timeline. In the Figure, the release dates of some Apple products and some OUIs registered by Apple are shown. For any one of these OUIs, it is possible to infer what products the OUI could correspond to. For instance, among these devices, OUI 5C:59:48 can be assigned to an iPad or, possibly, an iPhone 4 that was launched shortly afterwards. However, OUI 5C:59:48, cannot be assigned to an iPad2, an iPad (3) Retina or an iPhone 4S as these were far from being launched at the time. Similarly, OUI 60:C5:47 can be either a iPad2, an iPad or an iPhone 4.

In addition, taking sales information of each product into account - i.e. steps S25-S27, it is possible to estimate a probability for each possible product based on sales of each product on the period. For example, if, at the time, iPods accounted for 10% of all sales, iPhones for 60% and iPads for 30%, then, continuing the example for OUI 60:C5:47 above (in which iPods are excepted), there is a 2/3 chance that the device is an iPhone 4 and a 1/3 chance an iPad or an iPad 2. Such information is usually publically available and it is assumed that the device 100 has access to it.

Below is an example of device identification based on MAC addresses.

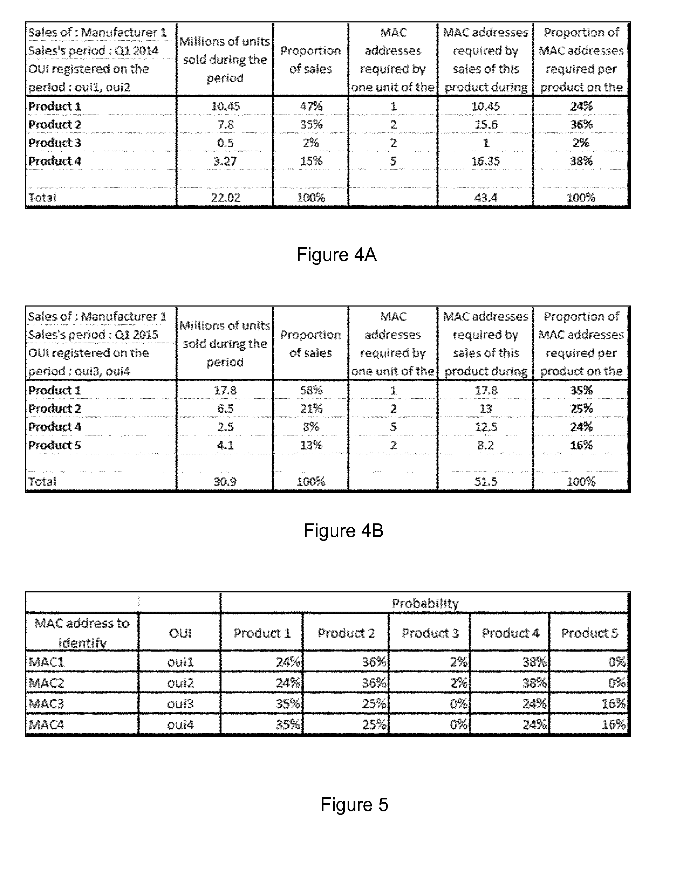

Figure 4A illustrates the sales of manufacturer "Manufacturer 1" for the period Q1 2014. It is assumed that the manufacturer used OUI1 and OUI2 during this period. Figure 4B illustrates sales during the period Q2 2014 during which OUI3 and OUI4 were used.

Figure 5 illustrates identification of four devices based on probabilities.

It will be appreciated that the present principles can provide a solution that provides device specific information from a MAC address.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. An apparatus (100) for determining device specific information from a MAC address, the apparatus (100) comprising:
a network interface (130) configured to receive a MAC address of a device; and
a hardware processor (110) configured to:
determine a Organizationally Unique Identifier from the MAC address;
determine, using the Organizationally Unique Identifier, the manufacturer of the device and the Organizationally Unique Identifier registration date; and
determine, using the Organizationally Unique Identifier registration date and model sales information for the manufacturer of the device, possible matching models.

2. The apparatus of claim 1, wherein the hardware processor (110) is further configured to use knowledge about the possible matching models for network management.

3. The apparatus of claim 2, wherein network management comprises at least one of device authentication, device specific tests in order to further determine the model, pushing of updates for the device towards the device, and determination the age of the device to determine whether or not the device needs an update.

4. The apparatus of claim 1, wherein the hardware processor (110) is further configured to compute, for each model, a probability that the device is of the model from relative sales of the models and a number of MAC addresses used by each device of the model.

5. A method for determining device specific information from a MAC address, the method comprising at an apparatus (100):
receiving (S21), by a network interface (130) of the apparatus, a MAC address of a device;
determining (S22), by a hardware processor (110) of the apparatus, a Organizationally Unique Identifier from the MAC address;
determining (S23), by the hardware processor (110) using the Organizationally Unique Identifier, the manufacturer of the device and the Organizationally Unique Identifier registration date; and
determining (S24), by the hardware processor (110) using the Organizationally Unique Identifier registration date and model sales information for the manufacturer of the device, possible matching models.

6. The method of claim 5, further comprising performing (S28) by the hardware processor (110) network management based on knowledge about the possible matching models.

7. The method of claim 6, wherein network management comprises at least one of device authentication, device specific tests in order to further determine the model, pushing of updates for the device towards the device, and determination the age of the device to determine whether or not the device needs an update.

8. The method of claim 5, further comprising computing (S27) by the hardware processor (110), for each model, a probability that the device is of the model from relative sales of the models and a number of MAC addresses used by each device of the model.

9. Computer program comprising program code instructions executable by a processor for implementing the steps of a method according to at least one of claims 5 to 8.

10. Computer program product (160) which is stored on a non-transitory computer readable medium and comprises program code instructions executable by a processor for implementing the steps of a method according to at least one of claims 5 to 8.
